# EUROPEAN PATENT SPECIFICATION

(11) **EP 4 600 027 B1**
(45) Date of publication and mention of the grant of the patent: **04.11.2026**
(21) Application number: 24157117.3
(22) Date of filing: 12.02.2024
(51) Int. Cl.: B29C 65/48, B29C 65/78, F21V 15/04, F16F 7/00, F16F 15/02, F21S 45/10, B29L 31/00

(54) **SYSTEM AND METHOD FOR MOUNTING CUSHIONING SHOCKPROOF COMPONENTS ON AN AUTOMOTIVE LIGHTING APPLIANCE**
SYSTEM UND VERFAHREN ZUR MONTAGE STOSSFESTER DÄMPFUNGSKOMPONENTEN AUF EINER KRAFTFAHRZEUGBELEUCHTUNGSVORRICHTUNG
SYSTÈME ET PROCÉDÉ DE MONTAGE DE COMPOSANTS AMORTISSANTS ET RÉSISTANTS AUX CHOCS SUR UN APPAREIL D'ÉCLAIRAGE D'AUTOMOBILE

(43) Date of publication of application: 13.08.2025
(73) Proprietor: MARELLI AUTOMOTIVE LIGHTING ITALY S.p.A., 10078 Venaria Reale (TO) (IT)
(72) Inventor: CANDIDO, Chistian, 33028 TOLMEZZO (UD) (IT); CORRADINA, Luca, 33028 TOLMEZZO (UD) (IT); COSANO, Giuliano, 33028 TOLMEZZO (UD) (IT); POLO, Fabio, 33028 TOLMEZZO (UD) (IT)
(74) Representative: Studio Torta S.p.A.

(56) References cited:
- CN-U- 205 155 790
- KR-A- 20050 004 970
- US-A1- 2016 320 030

## Description

### TECHNICAL FIELD

The present invention relates to a system and method for mounting cushioning shockproof components on an automotive lighting appliance.

In particular, the present invention relates to the semi-automatic and/or automatic mounting of shockproof cushioning components on the external contact surfaces of an automotive lighting appliance, to which the following discussion will make explicit reference without thereby losing generality.

### BACKGROUND

As is well known, when a lamp body of an automotive lighting appliance is mounted in the respective housing seat obtained in the body of the motor vehicle, it has points of contact with the seat itself. The contact between the body and the lamp body exposes the latter to mechanical stresses, such as vibrations, which are transmitted to the lamp body by the motor vehicle during its operation/use. Prolonged and/or high amplitude vibrations can cause damage to the lamp body or its internal electronic components.

In order to prevent the above-mentioned drawbacks, shockproof cushioning components, which are structured so as to attenuate the mechanical stresses and vibrations transmitted by the body to the lamp body, are applied at the points of contact between the lamp body and the body.

Shockproof cushioning components commonly used in automotive lighting appliances comprise rubber pads. The rubber pad generally consists of a body of elastic material which has a plate-like shape and two opposite contact faces, one face having an adhesive layer fixing the rubber pad to the lamp body, the opposite face resting on the housing seat.

The application of the plate-like rubber pads to the automotive lamp is usually carried out manually by an operator, along a dedicated line for mounting the automotive lighting appliance.

At present, this manual mounting operation has a number of technical issues, some of which are described in the following discussion.

A first technical issue is the long time required to carry out the aforementioned operation for fixing the rubber pad. The operator, in fact, must carefully separate the adhesive rubber pad from a support tape and apply it to the lamp body in a pre-established position. The particularly small size of the rubber pad, generally in the order of a few millimetres, increases the complexity of both the manual operation of separating and picking up the adhesive rubber pad from the support tape and the operation of applying the adhesive rubber pad to the lamp body with the required precision.

In addition, as the adhesive rubber pad is generally placed close to other rubber pads, the selective gripping of the individual rubber pad is a complex operation. It is often the case that, when picking up the individual rubber pad, the operator has difficulty separating it from the rubber pads surrounding it and accidentally picks up a few of them. In this case, the operator is forced to manually separate the excess rubber pads from the selected rubber pad, resulting in an increase in the time for the mounting thereof, as well as in some cases the discarding of the excess rubber pads.

A second technical issue occurs when, during the handling of a rubber pad, the operator accidentally touches the adhesive layer, thereby compromising the ability to fix it to the lamp body. In case of incomplete fixing, the rubber pad tends to detach from the lamp body, exposing it to the risk of damage.

Patent document KR20050004970 A discloses a sheet bonding apparatus for manufacturing a backlight, the apparatus comprising sheet separation means for separating sheets successively from a base film and a sheet picker to transfer the sheets and locate them in their final position.

Solutions disclosed in GB2408972A, EP2878431A2 and EP0659646A1 are also known.

### DESCRIPTION OF THE INVENTION

The object of the present invention is therefore to provide a system and a method for mounting shockproof
cushioning components on an automotive lighting appliance,
which at least overcome the technical issues described above.

In accordance with this object, according to the present invention, a system for mounting shockproof cushioning components on an automotive lighting appliance is provided, as defined in the related independent claims, and preferably, but not necessarily, in any one of the claims dependent thereon.

A method for mounting shockproof cushioning components on an automotive lighting appliance is also provided, as defined in the related independent claims, and preferably, but not necessarily, in any one of the claims dependent thereon.

The claims describe preferred embodiments of the present invention and form an integral part of the present specification.

### BRIEF DESCRIPTION OF THE DRAWINGS

The present invention will now be described with reference to the accompanying drawings, which illustrate a non-limiting embodiment thereof, wherein:
Figure 1 is a perspective view of a system for mounting shockproof cushioning components on an automotive lighting appliance, manufactured according to the teachings of the present invention,
Figure 2 is a side elevation perspective view of the system for mounting shockproof cushioning components on an automotive lighting appliance shown in Figure 1,
Figure 3 is a rear perspective view of a lamp body of an automotive lighting appliance showing a couple of shockproof cushioning components,
Figure 4 is an enlarged scale front view of a part of the system for mounting shockproof cushioning components on an automotive lighting appliance shown in Figure 1,
Figure 5 is an enlarged side elevation perspective view of a part of the system for mounting shockproof cushioning components on an automotive lighting appliance shown in Figure 1,
Figure 6 is an enlarged scale front view of a part of the system for mounting shockproof cushioning components on an automotive lighting appliance shown in Figure 1,
Figure 7 is an enlarged scale perspective view of the gripping device of the system for mounting shockproof cushioning components on an automotive lighting appliance shown in Figure 1,
Figure 8 is an enlarged scale perspective view of the gripping head of the gripping device of the system for mounting shockproof cushioning components on an automotive lighting appliance shown in Figure 1,
Figure 9 shows a vertical section of the gripping device of the system for mounting shockproof cushioning components on an automotive lighting appliance shown in Figure 1,
Figure 10 is an enlarged scale perspective view of a gripping device according to an alternative embodiment,
Figure 11 is a partially sectional and enlarged scale perspective view of the gripping device shown in Figure 10 according to a first operating condition,
Figure 12 is a partially sectional and enlarged scale perspective view of the gripping device shown in Figure 10 according to a second operating condition,
Figures 13, 14 and 15 are respective, enlarged scale perspective views of a gripping head of a gripping device manufactured according to respective alternative embodiments,
Figure 16 shows a system for mounting shockproof cushioning components on an automotive lighting appliance manufactured according to an alternative embodiment in which the gripping device 16 is moved by a robotic arm.

### DESCRIPTION OF EMBODIMENTS

The present invention will now be described in detail with reference to the accompanying drawings in order to allow a skilled person to implement it and use it. Various modifications to the described embodiments will be readily apparent to those skilled in the art and the general principles described may be applied to other embodiments and applications without however departing from the protective scope of the present invention as defined in the attached claims. Therefore, the present invention should not be construed as limited to the embodiments described and illustrated herein, but it must be given the broadest protective scope consistent with the principles and features described and claimed herein.

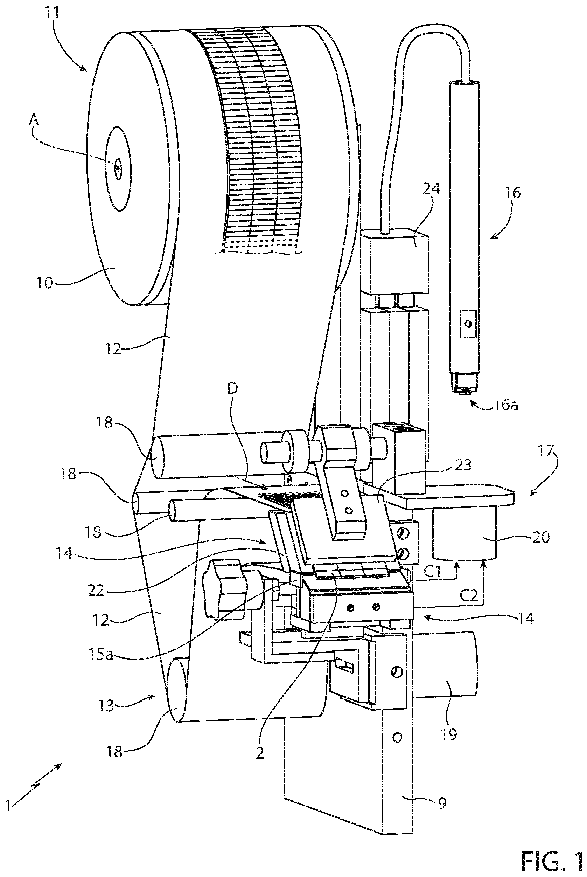

With reference to Figures 1, 2 and 3, the numeral 1 indicates, as a whole, a system for installing/mounting one or more shockproof components 2 in an automotive lighting appliance 3. The automotive lighting appliance 3 is configured so that it is installed/mounted in a motor vehicle (not shown) outside thereof. According to the present invention, the term "motor vehicle" refers to a car, a truck, a coach, or similar vehicles.

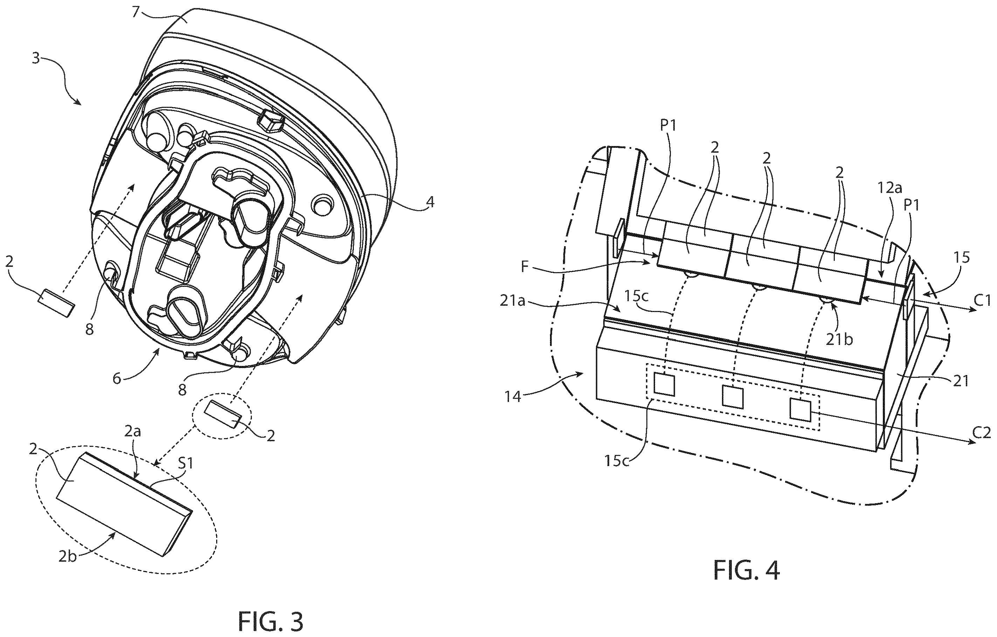

In the example shown in Figure 3, the automotive lighting appliance 3 is a rear lamp of the motor vehicle. However, it is understood that the present invention is not to be construed as limited to a rear lamp of a motor vehicle, but may be applied, additionally and/or alternatively, to any other type of lamp of the motor vehicle such as, for example, a front lamp (a motor vehicle headlamp), or a side lamp of the motor vehicle.

With reference to Figure 3, the automotive lighting appliance 3 may include a lamp body 4 forming the outer casing of the lamp, and a lighting device 5 which is arranged inside the lamp body 4. The lighting device 5 may be equipped with one or more electronic and/or electrical circuits and one or more light sources. Preferably, the light sources may comprise, for example, LED light sources or the like. More preferably, the LED light sources may comprise mini-LEDs and/or micro-LEDs.

According to a possible embodiment, the lamp body 4 may comprise a rear shell 6 and one or more front lenticular bodies 7. According to a possible embodiment shown in Figure 3, the shell 6 can be shaped preferably, but not necessarily, in the shape of a cup. The shell 6 may be structured to be recessed within a compartment created in the vehicle body. The front lenticular body 7 may be made, for example, at least partially of a transparent or semitransparent material and is structured so that it can be coupled to the shell 6 in order to close the opening of the cup-shaped body.

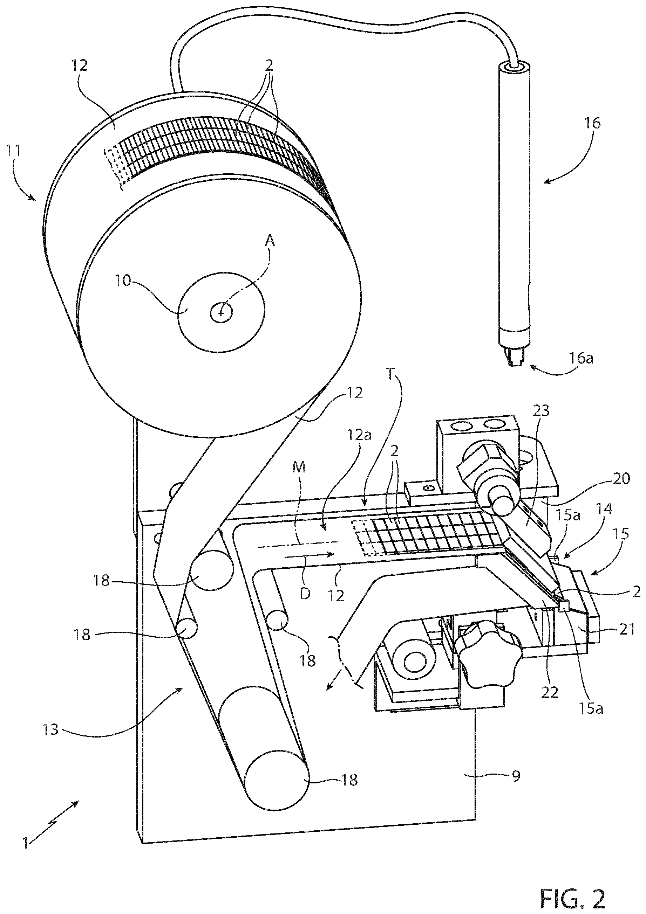

According to the present invention, the automotive lighting appliance 3 further comprises one or more shockproof cushioning components 2 shown schematically in the accompanying figures, particularly in Figure 2. The shockproof components 2 are structured so that they are firmly fixed to respective pre-established mounting areas 8 of the lamp body 4. Preferably, the mounting areas 8 are arranged on the outer surface of the lamp body 4 intended to be close to/adjacent to the inner surface of the relevant housing compartment of the motor vehicle.

According to a preferred, but not exclusive, embodiment shown in Figure 3, the shockproof component 2 may include a plate-like body, i.e., a plate. Preferably, the shockproof component 2 can have a circular or polygonal perimeter, e.g., a quadrangular perimeter. More preferably, the shockproof component 2 has a rectangular or square perimeter.

Preferably, the shockproof component 2 can be made of a cushioning material and have a reduced thickness, i.e. be thin (a size in the order of one millimetre). More preferably, the cushioning material comprises an elastic material. Even more preferably, the cushioning material can be rubber-based or any similar elastic material. For example, the shockproof component 2 can be a rubber pad.

According to a preferred, but not exclusive, embodiment, the shockproof component 2 has a face 2a on which there is a layer of adhesive material S1 (adhesive face). According to a preferred, but not exclusive, embodiment (Figure 4), the shockproof component 2 also has a face 2b (the cushioning face), opposite the face 2a, which, in use, i.e. when mounted on the lamp, substantially contacts or rests, for example, against the inner surface of the relevant housing compartment of the motor vehicle.

According to a preferred, but not exclusive, embodiment, the face 2a of the shockproof component 2 is fixed, via the adhesive layer, to the relevant mounting area 8 of the lamp body 4.

With reference to the embodiment shown in Figures 1 and 2, the system 1 can comprise a support frame 9. In the example shown, the support frame 9 supports a reel 10 on which a spool 11 is mounted so that it can rotate around an axis A. According to the present invention, the spool 11 comprises: a film 12 formed by a flexible tape, which is wound around the axis A of the reel 10 so as to form an unwindable roll, and shockproof components 2.

According to a preferred, but not exclusive, embodiment shown in Figures 1, 2 and 6, the film 12 has a face 12a arranged on the upper part. The shockproof components 2 are arranged on the face 12a of the film 12 side by side, so as to form a plurality of adjacent rows (or lines). The rows of shockproof components 2 are arranged parallel to each other, one after the other, each extending transversely to a middle line or longitudinal axis M of the film 12.

The shockproof components 2 are (adhesively) coupled to the face 12a of the film 12 so that they can be easily detached/separated therefrom.

It is understood that, alternatively and/or additionally, a row may comprise a single shockproof component 2.

According to a preferred, but not exclusive, embodiment shown in Figures 1, 2 and 6, each row comprises the same number of shockproof components 2 as the adjacent rows. According to a preferred, but not exclusive, embodiment, the shockproof components 2 of the spool 11 are rectangular and have the same size.

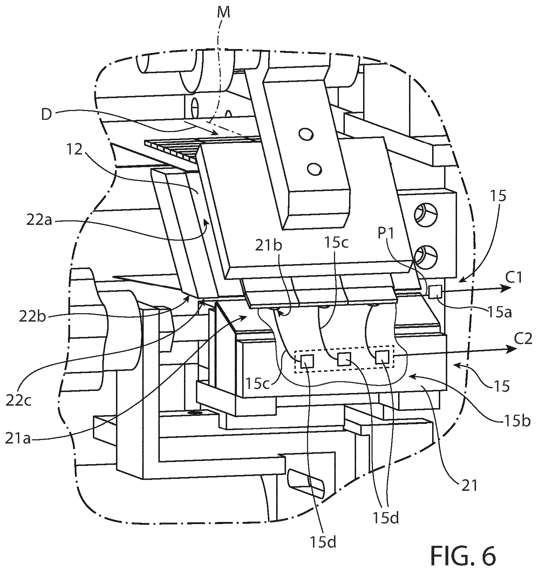

According to the embodiment shown in Figures 1 and 6, the system 1 further comprises a feeding assembly 13 which is preferably supported by the frame 9 and is configured to unwind the spool 11 in a controlled manner and on command, so as to move the unwound film 12 along a pre-established feeding path from the reel 10 to a pick-up station 14. The pick-up station 14 is configured so that the shockproof components 2 are separated from the film 12 (as detailed below) in order to be firmly fixed to/mounted on the lamp body 4 of the automotive lighting appliance.

According to the embodiment shown in Figures 1, 2 and 6, the feeding path comprises an end section T in which the feeding assembly 13 moves the film 12 along a feeding direction D (towards the pick-up station 14) parallel to the middle longitudinal axis M.

According to a possible embodiment shown in Figures 1 and 2, the feeding assembly 13 can be equipped with a set of rollers 18 coupled to the support frame 9 along the feeding path. According to a possible exemplary embodiment shown in the accompanying figures, the feeding assembly 13 may comprise one or more rollers 18, which are mounted on the support frame 9 to rotate in a freely rotatable manner, i.e. idly, around the respective axes and are designed to keep the film 12 tensioned along the feeding path at least between the reel 10 and the pick-up station 14. The feeding assembly 13 also comprises at least one motorized roller 18, which is mechanically connected to an electric drive unit 19. The drive unit 19 may be, for example, an electric motor having the drive shaft connected to the roller 18 to rotate it. Preferably, the electric drive unit 19 may conveniently comprise an electric motor. The electric motor may be, for example, of the "stepper" type.

According to the embodiment shown in Figure 1, the system 1 further comprises an electronic control system 17. The electronic control system 17 can include an electronic control unit 20 which is configured to control the feeding assembly 13. According to the embodiment shown in Figure 1, the electronic control unit 20 is configured to control the drive unit 19 so that the film 12 can be moved automatically, and preferably step-by-step (as detailed below), along direction D towards the pick-up station 14.

As will be described in detail below and with reference to the example shown in Figures 4 and 6, the shockproof components 2 are separated in an orderly and selective manner, one after the other, from a respective end row F of the film 12 when the film 12 is stationary and the end row F is in a pre-established position P1 in the pick-up station 14.

In the example shown, the end row F corresponds to the front row of the shockproof components 2 which is most advanced on the tape of the film 12 in the pick-up station 14, along the feeding direction D. In the example shown, in which the shockproof components 2 are arranged on the film 12 in a continuous geometric matrix arrangement consisting of side-by-side rows and columns, the end row F is represented by the side of the matrix of shockproof components 2 which is on the front part of the film 12 in relation to the feeding direction D, at or in the pick-up station 14.

According to a preferred embodiment shown in Figures 1, 2, 4-6, the electronic control system 17 further comprises an electronic detection system 15, which is configured to detect/determine a correct film positioning condition when the end row F of the shockproof components 2 on the film 12 has reached the pre-established pick-up position P1 in the pick-up station 14 (Figure 6).

The electronic detection system 15 can also be configured to generate a first signal C1 when it detects the correct positioning condition.

According to a preferred embodiment shown in Figures 4 and 6, the electronic detection system 15 may also be configured to determine the presence and/or absence of shockproof components 2 in the end row **F.** More preferably, the electronic detection system 15 may also be configured to determine the presence and/or absence of each shockproof component 2 of the shockproof components 2 forming the end row F. The presence and/or absence of each shockproof component 2 in the end row F is indicative of the position of the shockproof component 2 along the end row F itself.

The electronic detection system 15 is also configured to generate a second signal C2 indicating the shockproof components 2 that are present in and/or absent from the end row F, preferably indicating the presence and/or absence of each shockproof component 2 in/from the end row F.

According to the present invention, the electronic control unit 20 can be configured to control the feeding assembly 13 on the basis of the first signal C1. It is understood that, alternatively and/or additionally, the electronic control unit 20 may also be configured to control the feeding assembly 13 on the basis of the second signal C2.

Preferably, the electronic control unit 20 is configured to control the feeding assembly 13 on the basis of the first signal C1, so as to automatically move the film 12 along the feeding path in direction D to make the end row F reach the pre-established pick-up position P1. The electronic control unit 20 is configured to control the feeding assembly 13 on the basis of the first signal C1, so that the forward movement of the film 12 automatically stops when the end row F reaches the pick-up position P1. In other words, the electronic control unit 20 is configured to automatically move the film 12 along the feeding path in direction D and stops this movement when the detection system 15 determines/detects that the end row F has reached the pick-up position P1, that is, when the correct film positioning condition is met.

Preferably, the electronic control unit 20 is also configured to control the feeding assembly 13 so that, when the film 12 is stationary and all the shockproof components 2 of the end row F have been separated from the film 12, i.e., when the end row F is empty, it activates the movement of the film 12 along the feeding path in direction D.

According to a possible exemplary embodiment, the electronic control unit 20 can be configured so that, when the film 12 is stationary and it detects that all the shockproof components 2 of the end row F have been separated from the film 12, i.e., when the end row F is empty, it activates a movement of a pre-established length and automatically stops the movement when the shockproof components 2 have been moved along the feeding path by a length equal to the above pre-established length. If the electric motor of the feeding assembly 13 is a stepper motor, the motor feed step can correspond to the pre-established length.

According to a possible embodiment shown in Figures 4, 5 and 6, the electronic detection system 15 may comprise optoelectronic detector devices 15a. Preferably, the optoelectronic detector devices 15a may comprise photoelectric devices configured to generate the first signal C1. More preferably, the optoelectronic detector devices 15a may comprise one or more photocells arranged in the pick-up station 14 in the pick-up position P1. Even more preferably, the photocells can emit/receive LASER signals, be arranged on one or more sides of the pick-up station 14, and be oriented so that they can detect when the end row F reaches the pick-up position P1.

According to a possible embodiment, the electronic detection system 15 further comprises optoelectronic detector devices 15b, which are configured to detect the presence or absence of a related shockproof component 2 of the end row F when the end row F has reached the pick-up position P1.

According to a possible exemplary embodiment, the optoelectronic detector devices 15b can be arranged in the pick-up station 14 so that they are positioned below the film 12 in such a position that each optically intercepts a relevant shockproof component 2 of the end row F. According to a possible embodiment, the optoelectronic detector devices 15b can generate LASER signals. According to a possible embodiment, the optoelectronic detector devices 15b can be arranged in a box-shaped casing 21 connected to the support frame 9 in the pick-up station 14.

According to a possible exemplary embodiment shown in Figures 4, 5 and 6, the box-shaped casing 21 has a top pick-up wall 21a which substantially faces the film 12 in the pick-up station 14. The optoelectronic detector devices 15b can comprise respective optical fibres 15c which extend, at least partially, inside the box-shaped casing 21 and have respective detection ends, which are arranged, aligned with each other, in respective through openings 21b obtained in the pick-up surface 21a of the casing 21 and face the end row F of the film 12. The detection ends of the optical fibres 15c and the respective through openings can be arranged adjacent to the film 12 in the pick-up station 14 so that they can detect the presence/absence of respective shockproof components 2 in the end row F of the film 12. The optoelectronic detector devices 15b can further comprise sensor devices 15d, which are optically coupled to the optical fibres at the ends opposite the detection ends and are configured to emit/receive light signals to/from the optical fibres in order to generate the second signal C2 on the basis of the light signals themselves.

Conveniently, the surface of the top wall 21a on which the shockproof component 2 is deposited may have a non-stick and/or anti-friction material structured so as to prevent the adhesive surface of the shockproof component 2 from sticking to the top wall 21a.

Conveniently, the surface of the top wall 21a on which the shockproof component 2 rests can be coated/covered with a layer or tape of non-stick or anti-friction material. Preferably, the tape may comprise a one-sided adhesive support tape coated with a plurality of protruding silicone elements and/or a one-sided adhesive tape with a silicone rubber cloth backing and permanent acrylic adhesive. Preferably, the tape may be made of a polytetrafluoroethylene (PTFE) (Teflon)- and/or silicone-polytetrafluoroethylene-based material.

For example, the tape could be the tape called "DuploCOLL^{®} 19095" marketed by the company Lohmann GmbH & Co. KG, or the tape called "RWT2000" marketed by the company B.M.P. srl.

With reference to Figures 1, 2, 7-9, the system 1 also includes a gripping device 16 which is configured to selectively pick up a shockproof component 2, which is present in the end row F of the film 12 that is stationary in the pick-up station 14, so that it is separated from the film 12.

According to a preferred embodiment, the gripping device 16 comprises a vacuum gripping tool, which is connected to a vacuum generator 24, such as a suction pump or pressure relief device, e.g., via an air duct (which is preferably flexible), and is designed to pick up/separate, through suction, the shockproof component 2 from the film 12 and/or the remaining shockproof components 2.

According to the embodiments shown in Figures 1, 2, 7-9, the gripping device 16 is fitted with a gripping head 16a, and is configured so that it can be operated, preferably in response to a command, to pick up, via the gripping head 16a, a shockproof component 2 so as to separate it from the film 12 and/or the other adjacent shockproof components 2, in order to hold it against the gripping head 16a itself. Preferably, the command can be generated when the gripping head 16a is substantially in contact with, resting on, the shockproof component 2 to be picked up.

According to a possible embodiment, the gripping device 16 is further configured to be operated, preferably in response to a command, to stop the temporary retention of the shockproof component 2 by the gripping head 16a, to cause the shockproof component 2 to be separated from the gripping head 16a itself. Preferably, the command can be generated during the mounting of the shockproof component 2, when the shockproof component 2 has been positioned resting on the mounting area 8 of the lamp body 4.

With reference to Figure 2, according to a possible embodiment, the feeding member 13 is configured to feed the film 12 along an end section T of the feeding path adjacent to, and immediately upstream of, the pick-up station 14 which lies in a conveniently approximately horizontal feed plane.

According to a possible embodiment shown in Figures 1, 2, 5, and 6, the pick-up station 14 comprises a separator plate 22, which is arranged on the support frame 9 and lies in a plane inclined downward in relation to the horizontal feed plane.

The separator plate 22 is substantially rectangular and has an upper sliding wall 22a lying in the above-mentioned inclined plane, and a lower sliding wall 22b lying in an approximately horizontal plane below the sliding wall 22a.

According to a possible embodiment, the rollers 18 of the feeding member are arranged on the support frame 9 to keep the film 12 tensioned along the feeding path and in constant contact with the sliding wall 22a and the sliding wall 22b.

Conveniently, a grooved guide, in which the film 12 can slide, can be made on the sliding wall 22a. The grooved guide can have a width corresponding to that of the film 12 and is configured to keep the film 12 along the feeding path inside the pick-up station 14.

In particular, one or more rollers 18 are arranged upstream of the separator plate 22 to keep the film 12 tensioned along the feeding path and in contact as it slides on the sliding wall 22a, and other rollers 18 are arranged downstream of the separator plate 22 to keep the film 12 tensioned on the sliding wall 22b.

Conveniently, the sliding wall 22a and the sliding wall 22b are contiguous with each other, have a substantially horizontal common side, which is transversal to the feeding direction D, and are arranged in relation to each other so that together they form an edge 22c which is adjacent to, but separate from, one side of the plate 20.

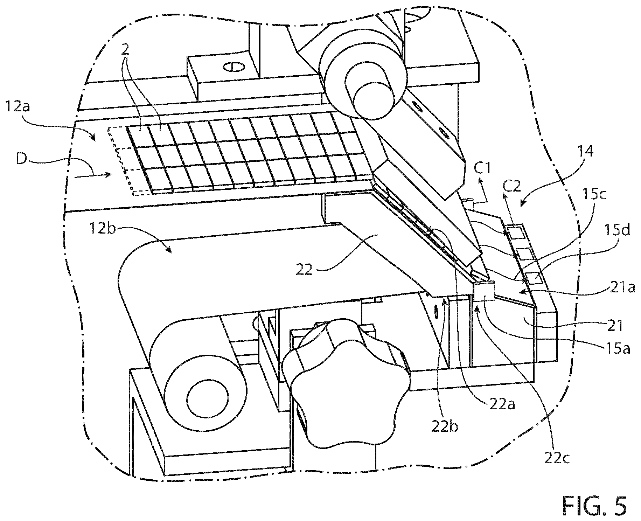

As shown in Figures 5 and 6, the edge 22c is configured to form an elbow-shaped section along the path of the film 12. The edge 22c therefore causes the end row F of shockproof components 2 to detach and separate automatically from the film 12. When the film 12, while moving, slides sequentially on the walls 22a and 22b, it bends on the edge 22c causing the end row F of the shockproof components 2 to detach from the film 12, before the end row F reaches the edge 22c itself. During the detachment from the film 12, the end row F continues its movement towards the top pick-up wall 21a and settles thereon. The top pick-up wall 21a is arranged slightly below the separator plate 22 so as to have one side facing the separator plate 22, which is immediately adjacent to the edge 12c.

It should be pointed out that the edge 22c causes the end row F of the shockproof components 2 to automatically detach from the film 12 because said film 12, being flexible, when passing on the edge 22c bends so that it remains adhered thereto, whereas the shockproof components 2 of the end row D, having a greater rigidity than the film 12, do not bend but substantially maintain the planar shape and continue to move as a whole so as to detach from the film 12 and settle on the adjacent top pick-up wall 21a.

Conveniently, the separator plate 22c forms a separating member 32 configured to automatically detach/separate the end row F of the shockproof components 2 from the film 12.

According to a possible embodiment shown in Figures 1, 2 and 3, the pick-up station 14 may further comprise an upper counterplate 23, which is connected to the support frame 9 and is arranged above the separator plate 22 in a position that is adjacent, facing, and approximately parallel to the sliding wall 22a below. The counterplate 23 is structured in such a way as to ensure that the film 12 is kept resting on the sliding wall 22a below.

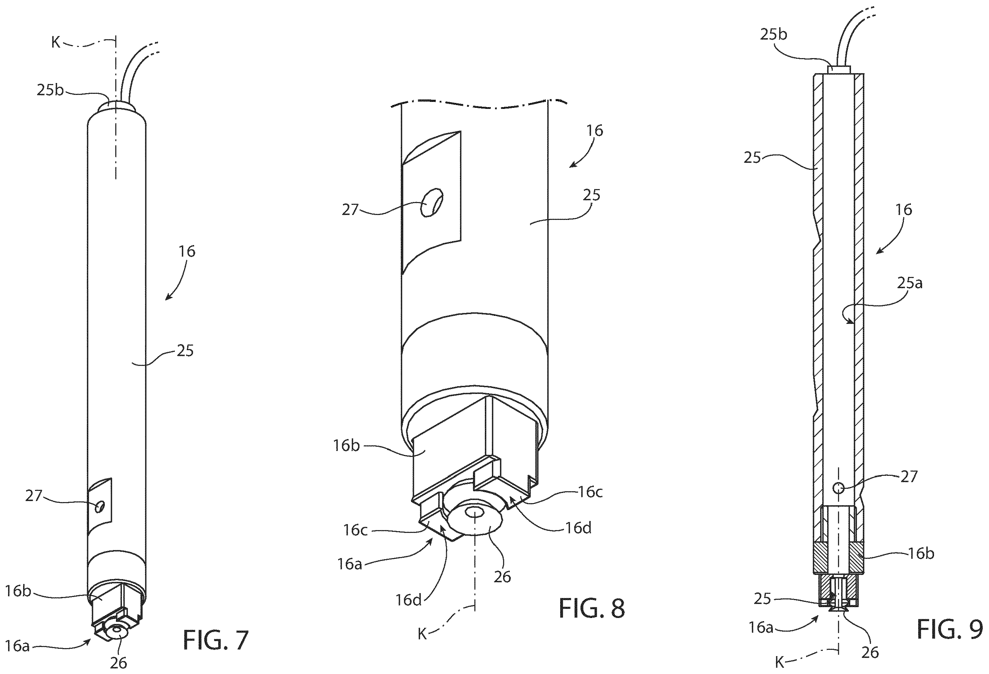

With reference to Figures 7, 8 and 9, the gripping device 16 comprises an outer casing 25 with a substantially tubular shape extending along a longitudinal axis K. According to a possible embodiment shown in Figures 7-9, the gripping device 16 comprises an inner chamber 25a extending within the casing 25 along the axis K and is in air communication with a first opening defined, for example, by a connector 25b connected to the vacuum generator 24 and to a through opening 25c in the gripping head 16a.

As shown in Figures 7-9, the gripping head 16a comprises a body 16b, which preferably, but not necessarily, is approximately parallelepiped in shape and has a flat rectangular surface orthogonal to the longitudinal axis K on which the through opening 25c is centrally obtained, which extends coaxially to the axis.

The gripping head 16a further comprises two protruding portions 16c, which extend cantilevered from the flat surface along the axis K and have respective support surfaces 16d on which, in use, the auxiliary component 2 arranges itself.

With reference to Figure 6, the gripping head 16a also centrally comprises a suction cup 26, which is firmly housed in the through opening and is in communication with the inner chamber 25a. The suction cup 26 is arranged centrally between the two protruding portions 16c, extends along the axis K so that it protrudes slightly from the support surfaces 16d and is structured so that it grips the shockproof component 2 when it is rested against it and the gripping device 16 is sucking.

In the example shown, the gripping device 16 further comprises a side hole 27 which is drilled through the casing 25 so that it is in communication with the inner chamber 25a of the casing 25 itself. In use, when the suction cup 26 is resting adherently on the face 2b of the component, the closing of the side hole 27 puts the suction of the vacuum station in direct communication with the suction cup 26 which then sucks the shockproof component 2, holding it against the surfaces 16d of the gripping head 16a.

Vice versa, the opening of the side hole 27 stops the suction through the suction cup 26, thereby causing the release, and therefore the separation of the shockproof component 2 from the gripping head 16a.

The following describes the method for mounting shockproof components 2 on an automotive lighting appliance 3, wherein it is assumed that in the initial step: the vacuum generator 24 is active, i.e., it generates suction in the inner chamber 25a, the hole 27 is open, the film 12 is stationary, and the end row F of the shockproof components 2 has not yet reached the pick-up position P1, for example, because it immediately precedes the row of the shockproof components just picked up from the film, and the gripping device 16 is of the manual type, that is to say that it can be gripped and controlled by an operator during the step of mounting the shockproof component 2.

In this step, the control unit 20 activates the feeding assembly 13 so that the film 12 and then the end row F move along the feeding path in direction D. During the movement, the film 12 bends at the edge 22c and causes the end row F of shockproof components 2 to separate from the face 12a of the film 12. During the detachment and forward movement of the film 12, the end row F continues its travel towards the top pick-up wall 21a and settles thereon. In this step, when the electronic detection system 15 detects that the end row F of shockproof components 2 has reached the pick-up position, it generates the first signal C1.

When the control unit receives the first signal C1, it determines that the end row F of shockproof components 2 has reached the pick-up position and commands the feeding member 13 to stop moving the film 12, which stops. In this condition, the end row F of shockproof components 2 is arranged on the top pick-up wall 21a, detached both from the film 12 and from the row of shockproof components preceding it (upstream), which is still on the film 12 and forms the next end row F, which will be detached from the film 12 in the next step.

The Applicant found that providing the film 12 with a feeding path passing on the separator plate 22 and on the edge 22c and placing the top pick-up wall 21a in a position that is separate from but adjacent to the edge 22c make it conveniently possible, on the one hand, for the end row F of shockproof components 2 to be automatically separated and detached from the film 12, and on the other hand, for the same shockproof components 2 to be automatically positioned on the pick-up surface 21.

In this step, the shockproof components 2 of the end row F arrange themselves above the openings 21b in the top pick-up wall 21a and their presence is then detected by the optoelectronic devices 15b. When the optoelectronic detector devices 15b detect the shockproof components 2 they generate the second signal C2 indicating the presence of each of them in the pick-up station 14.

According to the embodiment shown in Figures 1-11, the gripping device 16 is gripped and moved by the operator who performs the operation of selectively gripping a shockproof component 2 of the end row F by positioning the gripping head 16a against the shockproof component 2 to be picked up. In this step, the contact of the gripping head 16a with the shockproof component causes the face 2b of the shockproof component 2 to rest centrally on the suction cup 26, compressing it partially and laterally on the two support surfaces 16d.

The operator commands the suction, i.e., the gripping of the shockproof component by the gripping head 16a, via the gripping device 16, by closing the control hole 27. Closing the control hole 27 activates the vacuum in the inner chamber 25a and causes the suction of the shockproof component 2 by the suction cup 26 which grips it.

The gripping device 16 is then moved by the operator, who keeps the control hole 27 closed to retain the shockproof component 2 on the gripping head 16a and places the gripping head 16a against the lamp to mount the shockproof component 2.

In particular, the gripping head 16a of the gripping device 16 is arranged by the operator against the mounting area 8 of the lamp body 4 in order to fix the adhesive face 2a of the shockproof component 2 to the mounting area 8 itself.

When the shockproof component 2 is arranged in the mounting area 8, the gripping device 16 is deactivated by the operator who opens the control hole 27 and stops the suction through the suction cup 26 in order to release the shockproof component 2 fixed to the lamp body 4.

The steps described above relating to the mounting, i.e., the operations of gripping and releasing the shockproof components 2 of the end row F, are repeated while keeping the film 12 stationary as described above until all the shockproof components 2 of the end row have been picked up. The determination of this condition is carried out by the detection system 15 using the optical detector devices 15b. In particular, when the electronic control unit 20 determines, on the basis of the second signal C2, the absence of each of the shockproof components 2 of the end row F, it commands, via the feeding assembly 13, the film 12 to move forward towards the pick-up station until the new end row F of the shockproof components 2 of the film reaches the pre-established pick-up position P1. In this condition, all the above-described operations of the method are repeated.

The advantages of the system described above are many. Firstly, the time taken to mount the shockproof component on the lamp is reduced. The system drastically reduces the time required to pick-up and separate the shockproof component from the film. In fact, on the one hand, the system automatically places the shockproof components one row at a time in the pick-up position and, on the other hand, the gripping device, due to the shape of the gripping head, allows the shockproof component both to be quickly separated and picked up and to be released when it is mounted on the lamp.

In addition, the shape of the gripping head of the gripping device greatly reduces both the risk of damage to the shockproof component during handling and the risk of detachment thereof after it has been mounted on the lamp. In fact, the use of the gripping device reduces the risk of accidental contact of the operator with the adhesive surface of the shockproof component and the risk of manual deformation of the shockproof component.

It is clear that modifications and variations may be made to the lamp and method described and illustrated herein without departing from the scope of protection defined by the claims.

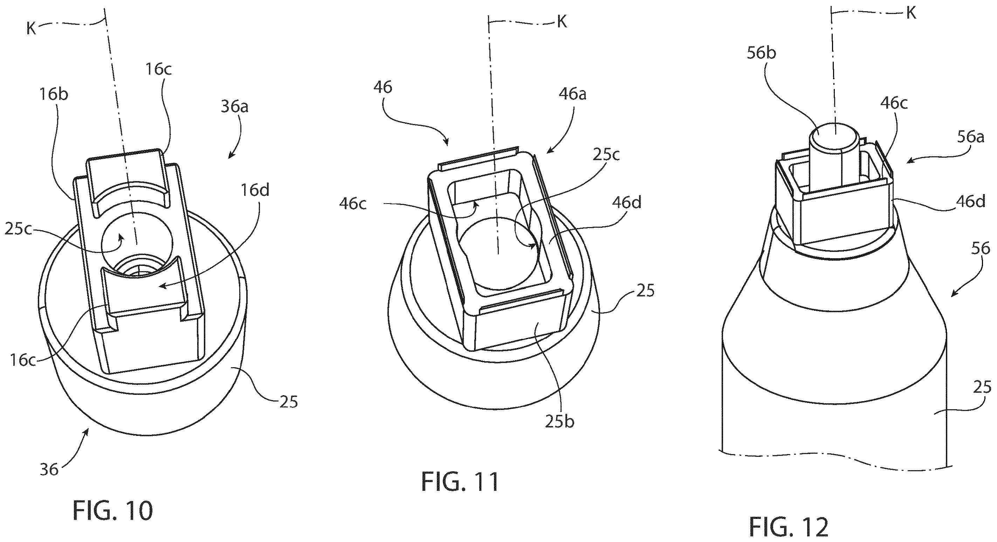

Figure 10 shows a gripping head 36a of a gripping device 36a of the system 1 which is similar to the gripping device 16 shown in Figures 7-9 and whose component parts will be identified, where possible, with the same reference numbers that identify corresponding parts of the gripping device 16.

In particular, the gripping head 36a of the gripping device 36 differs from the gripping head 16a of the gripping device 16 in that it lacks the suction cup 26. In this case, the closing of the side hole 27 causes a vacuum in the inner chamber 25 and a suction through the through opening 25c in the gripping head 36a, resulting in the suction and therefore the gripping of the shockproof component 2. Vice versa, the opening of the side hole 27 causes the vacuum in the inner chamber 25 to be stopped and the shockproof component 2 to be released by the gripping head 16a.

Figure 11 shows a gripping device 46 of the system 1 which is similar to the gripping device 16 shown in Figures 7-9 and whose component parts will be identified, where possible, with the same reference numbers that identify corresponding parts of the gripping device 16.

In particular, the gripping head 46a of the gripping device 36 differs from the gripping head 16a of the gripping device 16 in that it lacks the central suction cup 26 and the two protruding portions 16c. The gripping head 46a of the gripping device 36 also differs from the gripping head 16a of the gripping device 16 in that the body 25b has a rectangular inner seat 46c bounded laterally by a rectangular outer perimeter frame 46d. The dimensions of the perimeter frame 46d approximate those of the outer perimeter of the shockproof component 2 by excess. In use, when the gripping head 46a rests on the shockproof component 2, the perimeter frame 46d mechanically separates the shockproof component 2 from the adjacent shockproof components 2. When the gripping is commanded, the gripping device 46 sucks the shockproof component into the inner seat 46c.

Figures 12-15 show a gripping device 56 of the system 1 which is fitted with a gripping head 56a similar to the gripping head 46a of the gripping device 46 shown in Figure 11 and whose component parts will be identified, where possible, with the same reference numbers that identify corresponding parts of the gripping device 46.

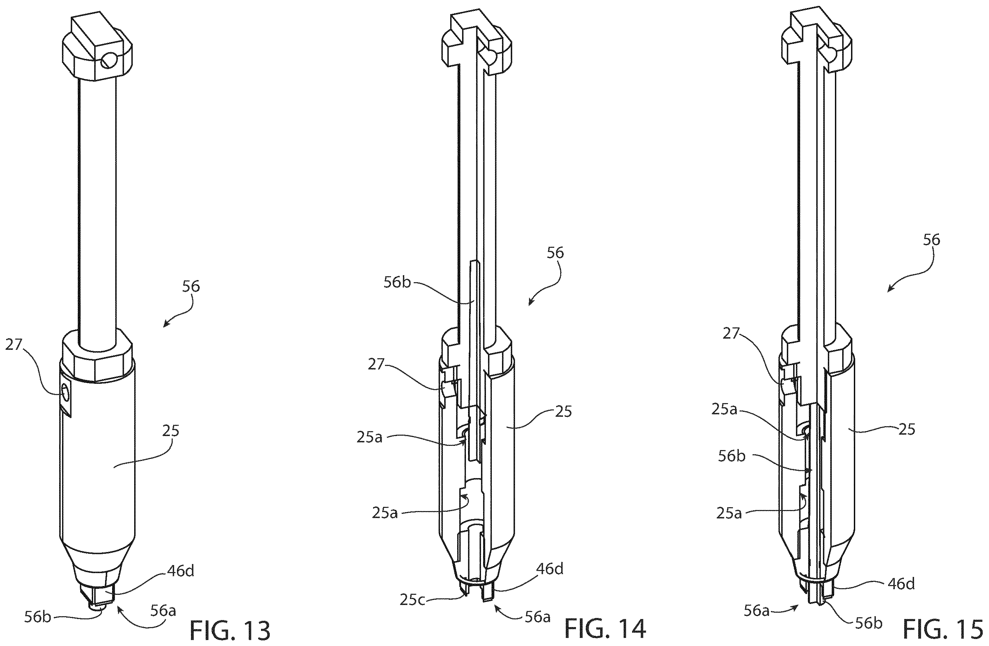

The gripping device 56 differs from the gripping device 46 in that it is equipped with a pusher member 56b which is configured to expel the shockproof component 2 on command from the inner seat 46c of the gripping head 56a. In the example shown, the pusher member 56a comprises a cylinder or rod which is mounted so that it can axially slide within the inner chamber 25a between a retracted position (shown in Figure 14), in which the pusher member 29 is arranged in the inner chamber 25a so that it does not protrude from the opening 25c, and an extracted position shown in Figures 12, 13 and 15, in which the pusher member 29 partially protrudes from the opening 25a in the seat 46c so that it pushes the shockproof body 2 out of the seat 46c.

The gripping device 56 also differs from the gripping device 46 in that the control hole 27 is in air communication with the inner chamber 25a so that the closing of the control hole 27 causes both the suction of air through the opening 25c and the movement of the pusher member to the retracted position.

The gripping device 56 also differs from the gripping device 46 in that the control hole 27 is in air communication with the inner chamber 25a so that the opening of the control hole 27 causes both the stopping of the suction of air through the opening 25c and the movement of the pusher member to the extracted position.

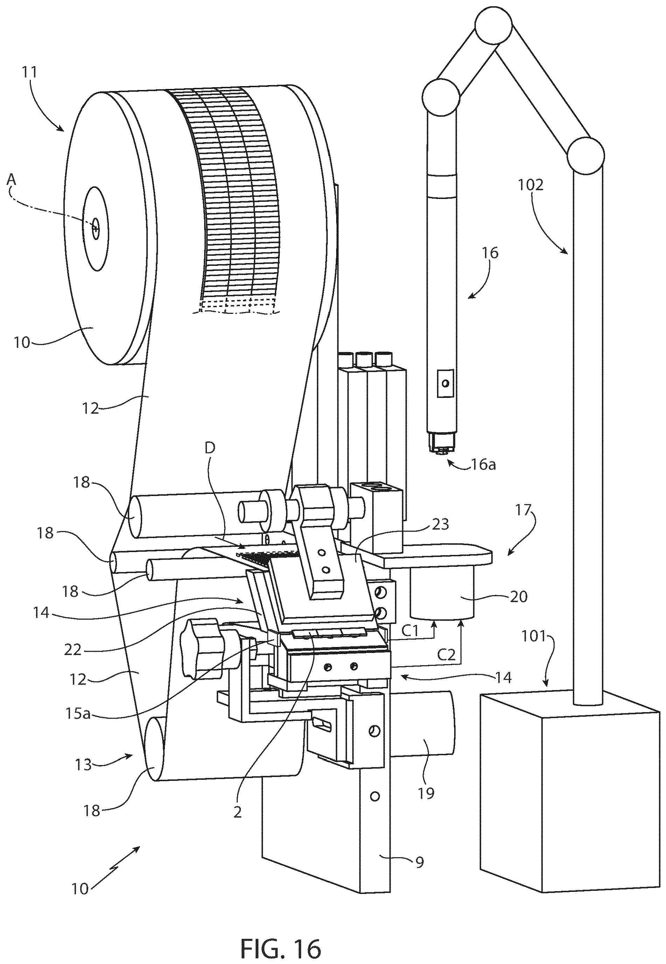

Figure 16 shows a system 100 similar to the system 1 shown in Figures 1 and 2 and whose component parts will be identified, where possible, with the same reference numbers that identify corresponding parts of the system 1.

The system 100 differs from the system 1 in that it comprises a robotic assembly 101 which is provided with a movable arm 102 that moves the gripping device 16.

The system 100 differs from the system 1 in that the electronic control unit 20 controls the robotic assembly 101 so as to guide the movement of the gripping device 16 when the shockproof component 2 is mounted on the lamp body 4. In particular, the electronic control unit 20 automatically controls the robotic assembly 101 so that the gripping device 16 is positioned with the gripping head 16a resting on the shockproof component 2 to be picked up after the end row F has been separated from the film 12 and controls the gripping device 16 to suck the shockproof component 2 from the pick-up station 14 so that it can be held by the gripping head 16a.

The electronic control unit 20 also controls the robotic assembly 101 in a fully automatic manner so as to move the gripping device 16, with the shockproof component 2 held by the gripping head 16a, from the pick-up station 14 to the lamp body 4 and guides the final movement of the gripping device 16 so that the gripping head rests on the mounting area 8 of the lamp body in order to fix the shockproof component 2.

The electronic control unit 20 also controls in a fully automatic manner the stopping of the suction in order to separate the shockproof component fixed to the lamp body from the gripping head 16. It is understood that in this embodiment the control of the movement of the robotic arm 102 can be carried out on the basis, for example, of a control system using images or sensors or according to a pre-established movement algorithm which provides for a pre-established positioning of the automotive lighting appliance and its contact areas 8.

## Claims

1. A system for mounting shockproof cushioning components (2) on the lamp body (4) of an automotive lighting appliance in respective pre-established mounting areas, wherein said shockproof components (2) have a plate-like shape and a first adhesive face (2a) and a second opposite non-adhesive face (2b),
the system comprises:
a spool (11) comprising a tape-like film (12) wound around a rotation axis (A) and a plurality of shockproof components (2), which are arranged with the first face (2a) coupled to the film (12) and side by side to form adjacent rows extending transversely to a middle longitudinal axis (M) of the film (12),
a pick-up station for picking up the shockproof components (2), which is provided with a top pick-up wall (21a),
a feeding assembly (13) which is configured to unwind the film (12) and move it forward along a pre-established feeding path so that the rows of the shockproof components (2) are moved sequentially, on command, towards the top pick-up wall (21a) of said pick-up station (14),
a separating member, which is arranged in the pick-up station and is fitted with a separator plate (22), which is arranged in the pick-up station (14) and is shaped in order to have an edge, for the sliding of said film (12), which is adjacent to the top pick-up wall and is structured to detach and separate the end row (F) of the shockproof components (2) from said film (12) when the end row (F), as the film moves forward, reaches the edge, so that the end row (F) is deposited on said top pick-up wall (21a),
a gripping member (16) configured to selectively pick up a shockproof component from said end row (F) deposited on said top pick-up wall (21a) and position said shockproof component so that the first face (2a) rests on a mounting area of a lamp body of said automotive lighting appliance in order to fix it firmly thereto.

2. The system according to claim 1, wherein said separator plate (22) is rectangular in shape and has an upper flat sliding wall (22a) lying in an inclined plane, and a lower flat sliding wall (22b) lying in an approximately horizontal plane below the sliding wall (22a); said sliding wall (22a) and said sliding wall (22b) are contiguous with each other along said feeding path for the film (12) and have a substantially horizontal common side, which is transversal to the direction of feeding of the film (12) and forms said edge (22c), which is adjacent to one side of said pick-up plate (20).

3. The system according to claim 2, wherein said feeding member (13) comprises a plurality of feeding rollers (18) for feeding said film (12), which are configured so as to keep the film (12) substantially tensioned along said feeding path so that, as the film (12) moves forward, it slides resting on the sliding wall 22a and on said sliding wall (22b) so that it forms a bend when it passes on said edge (22c).

4. The system according to claim 3, wherein said edge (22c) forms, on the film (12), a bend having an acute angle along the path of movement of the film (12).

5. The system according to any one of the preceding claims, comprising a detection system (15), which is configured to determine, during the movement of the rows of the shockproof components (2), a first condition, in which a pre-established end row (F) of said rows of the shockproof components (2) reaches a pre-established pick-up position (P1) in said pick-up station (14), and to stop the forward movement of the film (12) via said feeding assembly (3) when said first condition is determined in order to keep the end row (F) of the shockproof components (2) stationary in said pre-established pick-up position.

6. The system according to claim 5, wherein said detection system (15) is configured to determine the presence/absence of each of the shockproof components (2) of said end row (F) in said pick-up wall of said pick-up station (14).

7. The system according to claim 6, comprising an electronic control unit configured to:
activate the movement of the film (12) along the feeding path via said feeding assembly (13) when said detection system (15) determines a second condition in which all the shockproof components (2) of the end row (F) are absent,
stop the forward movement of the film (12) via said feeding assembly (13) when said first condition is determined.

8. The system according to any one of the preceding claims, wherein said shockproof components comprise rubber pads of a substantially quadrangular shape.

9. The system according to any one of the preceding claims, wherein said top pick-up wall (21a) is made of a non-stick or anti-friction material.

10. A method for mounting shockproof cushioning components (2) on the lamp body (4) of an automotive lighting appliance in respective pre-established mounting areas, wherein said shockproof components (2) have a plate-like shape, a first adhesive face (2a) and a second opposite non-adhesive face (2b),
the method comprising the steps of:
providing a spool (11) comprising a tape-like film (12) wound around a rotation axis (A) and a plurality of shockproof components (2), which are arranged with the first face (2a) coupled to the film (12) and side by side to form adjacent rows extending transversely to a middle longitudinal axis (M) of the film (12),
providing a pick-up station for picking up the shockproof components (2), which is provided with a top pick-up wall (21a),
unwinding the film (12) and moving it forward along a pre-established feeding path by means of a feeding assembly (13), so that the rows of the shockproof components (2) are moved sequentially, on command, towards the top pick-up wall (21a) of said pick-up station (14),
detaching and separating the end row (F) of the shockproof components (2) from said film (12) by means of a separating member, which is arranged in the pick-up station and is fitted with a separator plate (22), which is arranged in the pick-up station (14) and is shaped in such a way that it has an edge, for the sliding of said film (12), which is adjacent to the top pick-up wall and is structured to cause the detachment and separation of the end row (F) of the shockproof components (2) from said film (12) when the end row (F), as the film (12) moves forward, reaches the edge, so that the end row (F) is deposited on said top pick-up wall (21a),
selectively picking up a shockproof component from said end row (F) deposited on said top pick-up wall (21a) via a gripping member (16),
positioning said shockproof component so that the first face (2a) rests on a mounting area of a lamp body of said automotive lighting appliance in order to fix it thereto.

11. The method according to claim 10, wherein said separator plate (22) is rectangular in shape and has an upper flat sliding wall (22a) lying in an inclined plane, and a lower flat sliding wall (22b) lying in an approximately horizontal plane below the sliding wall (22a); said sliding wall (22a) and said sliding wall (22b) are contiguous with each other along said feeding path for the film (12) and have a substantially horizontal common side, which is transversal to the direction of feeding of the film (12) and forms said edge (22c), which is adjacent to one side of said pick-up plate (20).

12. The method according to claim 11, wherein said feeding member (13) comprises a plurality of feeding rollers (18) for feeding said film (12), which are configured so as to keep the film (12) substantially tensioned along said feeding path so that, as the film (12) moves forward, it slides resting on the sliding wall 22a and on said sliding wall (22b) so that it forms a bend when it passes on said edge (22c).

13. The method according to claim 12, wherein said edge (22c) forms, on the film (12), a bend having an acute angle along the path of movement of the film (12).

14. The method according to any one of the claims from 10 to 13 comprising the steps of
determining, during the movement of the rows of the shockproof components (2), by means of the detection system (15), a first condition, in which a pre-established end row (F) of said rows of the shockproof components (2) reaches a pre-established pick-up position (P1) in said pick-up station (14),
stopping the forward movement of the film (12) via said feeding assembly (3) when said first condition is determined in order to keep the end row (F) of the shockproof components (2) stationary in said pre-established pick-up position.

15. The method according to claim 14, comprising the step of determining, through said detection system (15), the presence/absence of each of the shockproof components (2) of said end row (F) in said pick-up wall of said pick-up station (14).

## Patentansprüche

1. System zum Montieren von stoßfesten Dämpfungskomponenten (2) an dem Lampenkörper (4) eines Kraftfahrzeugbeleuchtungsgeräts in jeweiligen vorgegebenen Montagebereichen, wobei die stoßfesten Komponenten (2) eine plattenartige Form und eine erste klebende Fläche (2a) und eine zweite gegenüberliegende nicht klebende Fläche (2b) aufweisen,
das System umfasst:
eine Spule (11) mit einer bandartigen Folie (12), die um eine Drehachse (A) gewickelt ist, und einer Vielzahl von stoßfesten Komponenten (2), die so angeordnet sind, dass ihre erste Fläche (2a) mit der Folie (12) gekoppelt ist und nebeneinander liegen, um benachbarte Reihen zu bilden, die sich quer zu einer Mittellängsachse (M) der Folie (12) erstrecken,
eine Aufnahmestation zum Aufnehmen der stoßfesten Komponenten (2), die mit einer oberen Aufnahmewand (21a) versehen ist,
eine Zuführanordnung (13), die dazu ausgelegt ist, die Folie (12) abzuwickeln und sie entlang eines vorgegebenen Zuführwegs vorwärts zu bewegen, so dass die Reihen der stoßfesten Komponenten (2) auf Befehl sequentiell in Richtung der oberen Aufnahmewand (21a) der Aufnahmestation (14) bewegt werden,
ein Trennelement, das in der Aufnahmestation angeordnet ist und mit einer Trennerplatte (22) ausgestattet ist, die in der Aufnahmestation (14) angeordnet und so geformt ist, dass sie eine Kante aufweist, zum Gleiten der Folie (12), die zur oberen Aufnahmewand benachbart und so strukturiert ist, dass sie die Endreihe (F) der stoßfesten Komponenten (2) von der Folie (12) löst und trennt, wenn die Endreihe (F) beim Vorwärtsbewegen der Folie die Kante erreicht, so dass die Endreihe (F) auf der oberen Aufnahmewand (21a) abgelegt wird,
ein Greifelement (16), das dazu ausgelegt ist, selektiv eine stoßfeste Komponente von der Endreihe (F) aufzunehmen, die auf der oberen Aufnahmewand (21a) abgelegt ist, und die stoßfeste Komponente so zu positionieren, dass die erste Fläche (2a) auf einem Montagebereich eines Lampenkörpers des Kraftfahrzeugbeleuchtungsgeräts aufliegt, um sie fest daran zu befestigen.

2. System nach Anspruch 1, wobei die Trennerplatte (22) eine rechteckige Form aufweist und eine obere ebene Gleitwand (22a), die in einer geneigten Ebene liegt, und eine untere ebene Gleitwand (22b) aufweist, die in einer etwa horizontalen Ebene unterhalb der Gleitwand (22a) liegt; wobei die Gleitwand (22a) und die Gleitwand (22b) entlang des Zuführwegs für die Folie (12) aneinander angrenzen und eine im Wesentlichen horizontale gemeinsame Seite aufweisen, die quer zur Zuführrichtung der Folie (12) verläuft und die Kante (22c) bildet, die zu einer Seite der Aufnahmeplatte (20) benachbart ist.

3. System nach Anspruch 2, wobei das Zuführelement (13) eine Vielzahl von Zuführrollen (18) zum Zuführen der Folie (12) umfasst, die so ausgelegt sind, dass sie die Folie (12) entlang des Zuführwegs im Wesentlichen unter Spannung halten, so dass, wenn sich die Folie (12) vorwärts bewegt, sie auf der Gleitwand 22a und auf der Gleitwand (22b) aufliegend gleitet, so dass sie eine Biegung bildet, wenn sie an der Kante (22c) vorbeiläuft.

4. System nach Anspruch 3, wobei die Kante (22c) auf der Folie (12) eine Biegung mit einem spitzen Winkel entlang des Bewegungswegs der Folie (12) bildet.

5. System nach einem der vorhergehenden Ansprüche, umfassend ein Erfassungssystem (15), das ausgelegt ist, um während der Bewegung der Reihen der stoßfesten Komponenten (2) einen ersten Zustand festzustellen, in dem eine vorgegebene Endreihe (F) der Reihen der stoßfesten Komponenten (2) eine vorgegebene Aufnahmeposition (P1) in der Aufnahmestation (14) erreicht, und um die Vorwärtsbewegung der Folie (12) über die Zuführanordnung (3) zu stoppen, wenn der erste Zustand festgestellt wird, um die Endreihe (F) der stoßfesten Komponenten (2) in der vorgegebenen Aufnahmeposition stationär zu halten.

6. System nach Anspruch 5, wobei das Erfassungssystem (15) dazu ausgelegt ist, das Vorhandensein/Fehlen jeder der stoßfesten Komponenten (2) der Endreihe (F) in der Aufnahmewand der Aufnahmestation (14) festzustellen.

7. System nach Anspruch 6, umfassend eine elektronische Steuereinheit, die zu Folgendem ausgelegt ist:
Aktivieren der Bewegung der Folie (12) entlang des Zuführwegs über die Zuführanordnung (13), wenn das Erfassungssystem (15) einen zweiten Zustand festgestellt, in dem alle stoßfesten Komponenten (2) der Endreihe (F) fehlen,
Stoppen der Vorwärtsbewegung der Folie (12) über die Zuführanordnung (13), wenn der erste Zustand festgestellt wird.

8. System nach einem der vorhergehenden Ansprüche, wobei die stoßfesten Komponenten Gummipolster mit einer im Wesentlichen viereckigen Form umfassen.

9. System nach einem der vorstehenden Ansprüche, wobei die obere Aufnahmewand (21a) aus einem haftungsfreien oder reibungsarmen Material besteht.

10. Verfahren zum Montieren von stoßfesten Dämpfungskomponenten (2) an dem Lampenkörper (4) eines Kraftfahrzeugbeleuchtungsgeräts in jeweiligen vorgegebenen Montagebereichen, wobei die stoßfesten Komponenten (2) eine plattenartige Form und eine erste klebende Fläche (2a) und eine zweite gegenüberliegende nicht klebende Fläche (2b) aufweisen,
wobei das Verfahren die folgenden Schritte umfasst:
Bereitstellen einer Spule (11) mit einer bandartigen Folie (12), die um eine Drehachse (A) gewickelt ist, und einer Vielzahl von stoßfesten Komponenten (2), die so angeordnet sind, dass ihre erste Fläche (2a) mit der Folie (12) gekoppelt ist und nebeneinander liegen, um benachbarte Reihen zu bilden, die sich quer zu einer Mittellängsachse (M) der Folie (12) erstrecken,
Bereitstellen einer Aufnahmestation zum Aufnehmen der stoßfesten Komponenten (2), die mit einer oberen Aufnahmewand (21a) versehen ist,
Abwickeln der Folie (12) und deren Vorwärtsbewegen entlang eines vorgegebenen Zuführwegs mittels einer Zuführanordnung (13), so dass die Reihen der stoßfesten Komponenten (2) auf Befehl sequentiell in Richtung der oberen Aufnahmewand (21a) der Aufnahmestation (14) bewegt werden,
Lösen und Trennen der Endreihe (F) der stoßfesten Komponenten (2) von der Folie (12) mittels eines Trennelements, das in der Aufnahmestation angeordnet und mit einer Trennerplatte (22) ausgestattet ist, die in der Aufnahmestation (14) angeordnet und so geformt ist, dass sie eine Kante aufweist, zum Gleiten der Folie (12), die zur oberen Aufnahmewand benachbart und so strukturiert ist, dass sie das Lösen und Trennen der Endreihe (F) der stoßfesten Komponenten (2) von der Folie (12) bewirkt, wenn die Endreihe (F) beim Vorwärtsbewegen der Folie (12) die Kante erreicht, so dass die Endreihe (F) auf der oberen Aufnahmewand (21a) abgelegt wird,
selektives Aufnehmen einer stoßfesten Komponente von der Endreihe (F), die auf der oberen Aufnahmewand (21a) abgelegt ist, über ein Greifelement (16),
Positionieren der stoßfesten Komponente, so dass die erste Fläche (2a) auf einem Montagebereich eines Lampenkörpers des Kraftfahrzeugbeleuchtungsgeräts aufliegt, um sie daran zu befestigen.

11. Verfahren nach Anspruch 10, wobei die Trennerplatte (22) eine rechteckige Form aufweist und eine obere ebene Gleitwand (22a), die in einer geneigten Ebene liegt, und eine untere ebene Gleitwand (22b) aufweist, die in einer etwa horizontalen Ebene unterhalb der Gleitwand (22a) liegt; wobei die Gleitwand (22a) und die Gleitwand (22b) entlang des Zuführwegs für die Folie (12) aneinander angrenzen und eine im Wesentlichen horizontale gemeinsame Seite aufweisen, die quer zur Zuführrichtung der Folie (12) verläuft und die Kante (22c) bildet, die zu einer Seite der Aufnahmeplatte (20) benachbart ist.

12. Verfahren nach Anspruch 11, wobei das Zuführelement (13) eine Vielzahl von Zuführrollen (18) zum Zuführen der Folie (12) umfasst, die so ausgelegt sind, dass sie die Folie (12) entlang des Zuführwegs im Wesentlichen unter Spannung halten, so dass, wenn sich die Folie (12) vorwärts bewegt, sie auf der Gleitwand 22a und auf der Gleitwand (22b) aufliegend gleitet, so dass sie eine Biegung bildet, wenn sie an der Kante (22c) vorbeiläuft.

13. Verfahren nach Anspruch 12, wobei die Kante (22c) auf der Folie (12) eine Biegung mit einem spitzen Winkel entlang des Bewegungswegs der Folie (12) bildet.

14. Verfahren nach einem der Ansprüche 10 bis 13, umfassend die Schritte zum
Feststellen, während der Bewegung der Reihen der stoßfesten Komponenten (2), mittels des Erfassungssystems (15), eines ersten Zustands, in dem eine vorgegebene Endreihe (F) der Reihen der stoßfesten Komponenten (2) eine vorgegebene Aufnahmeposition (P1) in der Aufnahmestation (14) erreicht,
Stoppen der Vorwärtsbewegung der Folie (12) über die Zuführanordnung (3), wenn der erste Zustand festgestellt wird, um die Endreihe (F) der stoßfesten Komponenten (2) in der vorgegebenen Aufnahmeposition stationär zu halten.

15. Verfahren nach Anspruch 14, umfassend den Schritt des Feststellens, durch das Erfassungssystem (15), des Vorhandenseins/Fehlens jeder der stoßfesten Komponenten (2) der Endreihe (F) in der Aufnahmewand der Aufnahmestation (14).

## Revendications

1. Système pour le montage de composants amortisseurs antichoc (2) sur le corps de lampe (4) d'un dispositif d'éclairage automobile, dans des zones de montage respectives prédéfinies, dans lequel lesdits composants antichoc (2) présentent une forme de plaque et comportent une première face adhésive (2a) et une seconde face opposée non adhésive (2b),
le système comprenant :
une bobine (11) comprenant un film en forme de ruban (12) enroulé autour d'un axe de rotation (A) et une pluralité de composants antichoc (2), qui sont disposés de telle sorte que leur première face (2a) soit couplée au film (12) et qu'ils soient placés côte à côte pour former des rangées adjacentes s'étendant transversalement à un axe longitudinal médian (M) du film (12),
une station de prélèvement pour prélever les composants antichoc (2), qui est pourvue d'une paroi de prélèvement supérieure (21a),
un ensemble d'alimentation (13) qui est configuré pour dérouler le film (12) et le déplacer vers l'avant le long d'un trajet d'alimentation prédéfini de sorte que les rangées des composants antichoc (2) soient déplacées séquentiellement, sur commande, vers la paroi de prélèvement supérieure (21a) de ladite station de prélèvement (14),
un élément de séparation, qui est disposé dans la station de prélèvement et est muni d'une plaque de séparation (22), qui est disposée dans la station de prélèvement (14) et est formée de manière à présenter un bord permettant le glissement dudit film (12), qui est adjacente à la paroi de prélèvement supérieure et est conçue pour détacher et séparer la rangée d'extrémité (F) des composants antichocs (2) dudit film (12) lorsque la rangée d'extrémité (F), au fur et à mesure que le film avance, atteint le bord, de sorte que la rangée d'extrémité (F) soit déposée sur ladite paroi de prélèvement supérieure (21a),
un élément de préhension (16) configuré pour prélever de manière sélective un composant antichoc de ladite rangée d'extrémité (F) déposée sur ladite paroi de prélèvement supérieure (21a) et pour positionner ledit composant antichoc de telle sorte que la première face (2a) repose sur une zone de montage d'un corps de lampe dudit dispositif d'éclairage automobile afin de le fixer solidement à celui-ci.

2. Système selon la revendication 1, dans lequel ladite plaque de séparation (22) est de forme rectangulaire et comporte une paroi coulissante supérieure plane (22a) située dans un plan incliné, et une paroi coulissante inférieure plane (22b) située dans un plan approximativement horizontal en dessous de la paroi coulissante (22a) ; ladite paroi coulissante (22a) et ladite paroi coulissante (22b) sont contiguës l'une à l'autre le long dudit chemin d'alimentation du film (12) et présentent un côté commun sensiblement horizontal, qui est transversal à la direction d'alimentation du film (12) et forme ledit bord (22c), qui est adjacent à un côté de ladite plaque de prélèvement (20).

3. Système selon la revendication 2, dans lequel ledit organe d'alimentation (13) comprend une pluralité de rouleaux d'alimentation (18) pour l'alimentation dudit film (12), qui sont configurés de manière à maintenir le film (12) sensiblement tendu le long dudit trajet d'alimentation, de sorte que, au fur et à mesure que le film (12) avance, il glisse en reposant sur la paroi coulissante (22a) et sur ladite paroi coulissante (22b), de manière à former un pli lorsqu'il passe sur ledit bord (22c).

4. Système selon la revendication 3, dans lequel ledit bord (22c) forme, sur le film (12), un pli présentant un angle aigu le long du trajet de déplacement du film (12).

5. Système selon l'une quelconque des revendications précédentes, comprenant un système de détection (15) qui est configuré pour déterminer, pendant le déplacement des rangées des composants antichoc (2), une première condition dans laquelle une rangée d'extrémité prédéfinie (F) desdites rangées des composants antichoc (2) atteint une position de prélèvement prédéfinie (Pl) dans ladite station de prélèvement (14), et à arrêter le déplacement vers l'avant du film (12) par l'intermédiaire dudit ensemble d'alimentation (3) lorsque ladite première condition est déterminée, afin de maintenir la rangée d'extrémité (F) des composants antichoc (2) immobile dans ladite position de prélèvement prédéfinie.

6. Système selon la revendication 5, dans lequel ledit système de détection (15) est configuré pour déterminer la présence ou l'absence de chacun des composants antichoc (2) de ladite rangée d'extrémité (F) dans ladite paroi de prélèvement de ladite station de prélèvement (14).

7. Système selon la revendication 6, comprenant une unité de commande électronique configurée pour :
activer le déplacement du film (12) le long du trajet d'alimentation par l'intermédiaire dudit ensemble d'alimentation (13) lorsque ledit système de détection (15) détermine une deuxième condition dans laquelle tous les composants antichoc (2) de la rangée d'extrémité (F) sont absents,
arrêter le déplacement vers l'avant du film (12) par l'intermédiaire dudit ensemble d'alimentation (13) lorsque ladite première condition est détectée.

8. Système selon l'une quelconque des revendications précédentes, dans lequel lesdits composants antichoc comprennent des patins en caoutchouc de forme sensiblement quadrangulaire.

9. Système selon l'une quelconque des revendications précédentes, dans lequel ladite paroi de prélèvement supérieure (21a) est réalisée en un matériau anti-adhérence ou antifriction.

10. Procédé de montage de composants amortisseurs antichoc (2) sur le corps de lampe (4) d'un dispositif d'éclairage automobile dans des zones de montage respectives prédéfinies, dans lequel lesdits composants antichoc (2) présentent une forme en plaque, une première face adhésive (2a) et une seconde face opposée non adhésive (2b),
le procédé comprenant les étapes suivantes :
la fourniture d'une bobine (11) comprenant un film en forme de ruban (12) enroulé autour d'un axe de rotation (A) et une pluralité de composants antichoc (2), qui sont disposés de telle sorte que leur première face (2a) soit couplée au film (12) et qu'ils soient placés côte à côte pour former des rangées adjacentes s'étendant transversalement à un axe longitudinal médian (M) du film (12),
la fourniture d'une station de prélèvement pour prélever les composants antichoc (2), qui est pourvue d'une paroi de prélèvement supérieure (21a),
le déroulement du film (12) et son déplacement vers l'avant le long d'un trajet d'alimentation prédéfini au moyen d'un ensemble d'alimentation (13), de sorte que les rangées des composants antichoc (2) soient déplacées séquentiellement, sur commande, vers la paroi de prélèvement supérieure (21a) de ladite station de prélèvement (14),
le détachement et la séparation de la rangée d'extrémité (F) des composants antichoc (2) dudit film (12) au moyen d'un élément de séparation, qui est disposé dans la station de prélèvement et est munie d'une plaque de séparation (22), qui est disposée dans la station de prélèvement (14) et est formée de telle sorte qu'elle présente un bord permettant le glissement dudit film (12), qui est adjacent à la paroi de prélèvement supérieure et est conçu pour provoquer le détachement et la séparation de la rangée d'extrémité (F) des composants antichocs (2) dudit film (12) lorsque la rangée d'extrémité (F), au fur et à mesure que le film (12) avance, atteint le bord, de sorte que la rangée d'extrémité (F) soit déposée sur ladite paroi de prélèvement supérieure (21a),
le prélèvement de manière sélective d'un composant antichoc de ladite rangée d'extrémité (F) déposée sur ladite paroi de prélèvement supérieure (21a) par l'intermédiaire d'un élément de préhension (16),
le positionnement dudit composant antichoc de telle sorte que la première face (2a) repose sur une zone de montage d'un corps de lampe dudit dispositif d'éclairage automobile afin de le fixer à celui-ci.

11. Procédé selon la revendication 10, dans lequel ladite plaque de séparation (22) est de forme rectangulaire et comporte une paroi coulissante supérieure plane (22a) située dans un plan incliné, et une paroi coulissante inférieure plane (22b) située dans un plan approximativement horizontal en dessous de la paroi coulissante (22a) ; ladite paroi coulissante (22a) et ladite paroi coulissante (22b) sont contiguës l'une à l'autre le long dudit chemin d'alimentation du film (12) et présentent un côté commun sensiblement horizontal, qui est transversal à la direction d'alimentation du film (12) et forme ledit bord (22c), qui est adjacent à un côté de ladite plaque de prélèvement (20).

12. Procédé selon la revendication 11, dans lequel ledit organe d'alimentation (13) comprend une pluralité de rouleaux d'alimentation (18) pour l'alimentation dudit film (12), qui sont configurés de manière à maintenir le film (12) sensiblement tendu le long dudit trajet d'alimentation, de sorte que, au fur et à mesure que le film (12) avance, il glisse en reposant sur la paroi coulissante (22a) et sur ladite paroi coulissante (22b), de manière à former un pli lorsqu'il passe sur ledit bord (22c).

13. Procédé selon la revendication 12, dans lequel ledit bord (22c) forme, sur le film (12), un pli présentant un angle aigu le long du trajet de déplacement du film (12).

14. Procédé selon l'une quelconque des revendications 10 à 13, comprenant les étapes suivantes
la détermination, pendant le déplacement des rangées des composants antichoc (2), au moyen du système de détection (15), d'une première condition, dans laquelle une rangée d'extrémité prédéfinie (F) desdites rangées des composants antichoc (2) atteint une position de prélèvement prédéfinie (P1) dans ladite station de prélèvement (14),
l'arrêt du déplacement vers l'avant du film (12) par l'intermédiaire dudit ensemble d'alimentation (3) lorsque ladite première condition est déterminée, afin de maintenir la rangée d'extrémité (F) des composants antichoc (2) immobile dans ladite position de prélèvement prédéfinie.

15. Procédé selon la revendication 14, comprenant l'étape de détermination, par l'intermédiaire dudit système de détection (15), de la présence ou l'absence de chacun des composants antichoc (2) de ladite rangée d'extrémité (F) dans ladite paroi de prélèvement de ladite station de prélèvement (14).
